(19) Europäisches Patentamt
European Patent Office
Office européen des brevets

(11) Publication number: 0 028 770
B1

(12) # EUROPEAN PATENT SPECIFICATION

(45) Date of publication of patent specification: 22.05.85

(51) Int. Cl.[4]: C 08 G 65/40

(21) Application number: 80106650.7

(22) Date of filing: 29.10.80

(54) **Method for the production of a polyether resin.**

(30) Priority: 29.10.79 JP 140367/79

(43) Date of publication of application:
20.05.81 Bulletin 81/20

(45) Publication of the grant of the patent:
22.05.85 Bulletin 85/21

(84) Designated Contracting States:
BE DE FR GB IT NL

(56) References cited:
DE-A-2 738 962
FR-A-1 334 654
GB-A-1 322 810
US-A-3 219 628
US-A-3 761 449

The file contains technical information submitted after the application was filed and not included in this specification

(73) Proprietor: KANEGAFUCHI KAGAKU KOGYO KABUSHIKI KAISHA
2-4 Nakanoshima 3-chome
Kita-ku Osaka-shi Osaka-fu (JP)

(72) Inventor: Yonezawa, Kazuya
11-9, 4-chome, Kimikage-cho Kita-ku
Kobe-shi Hyogo-ken (JP)
Inventor: Ishizu, Junichi
Sanseiso, 96-1 Aza-Takigahira Shioya-cho
Tarumi-ku Kobe-shi Hyogo-ken (JP)
Inventor: Matsuura, Miyuki
5-37, Yakushi-cho
Nishinomiya-shi Hyogo-ken (JP)

(74) Representative: Vossius Vossius Tauchner Heunemann Rauh
Siebertstrasse 4 P.O. Box 86 07 67
D-8000 München 86 (DE)

(56) References cited:
POLYMER BULLETIN,Vol.1,No. 12, November1979,BerlinT.D.N'GUYEN et al."Preparation of Polyethers by Phase Transfer Catalyzed Polycondensation" pages 817to 823

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

(56) References cited:
JOURNAL OF POLYMER SCIENCE, POLYMER LETTERS EDITION, Vol. 17 No. 2, February 1979 New York Y. IMAI et al. "Synthesis of Aromatic Polyether by Phase- Transfer-Catalyzed Polycondensation with Quaternary Ammonium Salts, Crown Ethers, and Poly(Ethylene Glycol)s pages 85 to 89

**Description**

The invention relates to a method for the production of a polyether containing alternating aromatic and aliphatic groups, being represented by the following general formula:

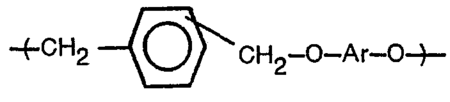

Ar is a divalent aromatic group.

After extensive research the inventors of the present invention have perfected a method for easily manufacturing said polymers in which the phase transfer reaction is applied to the production of said polyether resins.

It has been known that polyethers can by synthersized by reacting alkali salts of phenols and halides. Such a method, however, not only requires the use of anhydrous substances, but furthermore the reaction should be conducted in a aprotic polar solvent with a high boiling point such as dimethylformamide. As a result the time-consuming operation of isolating and purifying polymers is necessary after the reaction. In other words, owing to the need to remove by-produced salts as well as the problem of recovering aprotic polar solvents with high boiling points, conventional methods present drawbacks which entail reduced efficiency and increased production costs.

Since in the present invention the phase transfer reaction is employed, water is one component of the solvents used in the reaction, thereby not only obviating the need to remove by-produced salts but also making it possible to use cheap solvents with low boiling points such as halogenated hydrocarbons or aromatic hydrocarbons. Further, when suitable solvents such as xylene or toluene are used, it becomes possible to deposit polymers from the reaction system, which produces the added advantage that purification is greatly simplified.

These advantages of the phase transfer polymerisation are known in the art but up to now this reaction has been applied only to the preparation of polyethers from activated aromatic dihalides (Journ. of Polymer Science, Pol. Lett. Ed. Vol. 17, (1979), 85—89.

The polyether polymer of the invention can be produced by reacting aqueous solutions of caustic potash or caustic soda, in which bifunctional phenols are dissolved, and xylylene dichloride having the general formula:

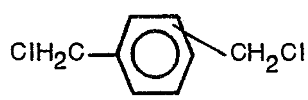

using said phase transfer catalysts. The reaction is conveniently carried out using organic solvents. As organic solvents, halogenated hydrocarbons (methylene chloride, chorbenzene, orthodichlorbenzene, etc.) or aromatic hydrocarbons (toluene, xylene, etc.) can be employed either alone or in combination as a mixture.

Xylylene dichloride is used in view of the low temperature of the reaction and low cost and high heat resistance of the resulting known polymers. Though o-, m-, or p- xylylenedichloride can be effectively used alone or in combination as a mixture, in view of the properties of polyether obtained it is desirable to use p-xylylenedihalides in an amount of at least 60 mole % or more. It is also preferable to employ o-xylylene-dichloride in an amount of 10 mole % or less.

Metallic salts of phenol compounds for use in the present invention, including bifunctional salts, have the general formula:

$$MO—Ar—OM'$$

wherein M and M' represent alkali metals and Ar is a divalent aromatic group usually having from 6 to 30 carbon atoms. Said phenol compounds include compounds having the following general formula:

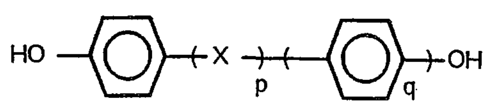

(wherein X is

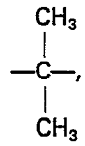

$SO_2$—, —$CH_2$—, —O—, or —S—, and p and q are each an integer of 0 or 1) such as resorcinol, hydroquinone, 4.4'-dihydroxydiphenyl, or other bifunctional phenol compounds. Phenol compounds which contain 1 to 4 chlorine or bromine atoms or 1 to 4 hydrocarbon or substituted hydrocarbon groups (for example, methyl, ethyl, propyl or butyl) in their aromatic units can also be used alone or in combination as a mixture depending on the envisaged use of the products. It is also possible to use phenol compounds which have more than two hydroxyl groups instead of part, though not more than 10% by mole, of the bifunctional compounds. The polyfunctinal phenols of the present invention may contain other groups located on aromatic nuclei such as halogen, lower alkyl groups having from one to 5 carbon atoms and substituted said alkyl groups.

It is desirable to employ these bifunctional phenol compounds in an amount of 0.9 to 1.2 moles per mole of the xylylene dichloride. When said bifunctional phenol compounds are used in lesser ratios, resin is obtained with only low degrees of polymerization. When said phenol compounds are used in higher molar ratios than that mentioned above, although this is permissible, excess phenol compounds will be left after the reaction is over.

It is effective and convenient to add these bifunctional phenol compounds to the reaction after dissolving them in excess aqueous solution of caustic soda or caustic potash.

The intrinsic viscosity (η) of products can be suitably adjusted by altering the kinds and amounts (molar ratios) of the compounds to be reacted. Products with an intrinsic viscosity of 0.3 dl/g or more are profitable from the stand-point of their characteristic properties, particularly as far as thermal resistance is concerned.

For example, oil-soluble ammonium salts such as $(C_4H_9)_4NBr$, $(C_4H_9)_4NI$, $(C_8H_{17})_3NCH_3Cl$, $C_5H_5NC_{12}H_{25}Br$, $C_5H_5NC_{12}H_{25}Cl$, $C_{10}H_{21}N(CH_3)_3Cl$, $C_{12}H_{25}N(CH_3)_3Cl$, $C_{16}H_{33}N(CH_3)_3Cl$, $C_{16}H_{33}N(CH_3)_3Br$ and $C_{16}H_{33}N(CH_3)_3OH$ quarternary phosphonium salts such as $(C_6H_5)_4PCl$, $(C_6H_5)_3PCH_3I$, and $(C_6H_5)_4AsCl$ and crown ethers such as Dicyclohexyl-18-Crown-6, Dicyclohexyl-24-Crown-8, 15-Crown-5, 18-Crown-6, Dibenzo-18-Crown-6, Dibenzo-24-Crown-8, Diaza-15-Crown and Diaza-18-Crown can be used. The amount to be used lies in the range of 0.1 to 2 0 mole %, more preferably 1 to 10 mole % of said xylylene dichloride.

The polymerization reaction in the presence of these phase transfer catalysts can usually be carried out at any temperature ranging between 0 to 100°C. Generally, the reaction is carried out for 5 to 20 hours, which is sufficient at said temperatures.

The polymers obtained are known and have properties such as excellent thermal resistance due to their structure and can be used in various applications including film sheets, or agents for improving the impact strength of polystyrene.

The following are examples of the present invention.

Example 1

In a nitrogen stream 10 m moles of p-xylylene dichloride were dissolved in 30 ml of chlorbenzene and 0.3 m moles of trioctylmethylammonium chloride were added to this mixture.

11 m moles of bisphenol-A were dissolved in 30 ml of 1N aqueous solution of caustic soda, and the resulting solution was added to the above-mentioned solution. The resultant mixture was then reacted firstly for 3 hours at 80°C and then for another 3 hours at 100°C. After the reaction the reacted solution was cooled to room temperature, whereupon polyether was deposited. This polymer was separated by filtering, washed with methanol-hydrochloric acid and then with water, and dried. Dried polymer has a melting point of 208°C and Tg of 167°C according to DSC. The polymer obtained seemed to be polyether judging from the reaction composition, and its structure was determined on the basis of infrared absorption spectrum and elementary analysis. Figure 1 shows the infrared absorption spectrum. The intrinsic viscosity (η) of the polymer determined in dimethylacetamide was 0.67.

Elementary analysis Calcd.: C, 83.60%; H, 6.71%
Found: C, 83.39%; H, 6.58%

Examples 2 and 3

By carrying out the same reaction as in Example 1, except that instead of chlorbenzene, toluene or xylene was used as a solvent, the same polymer as in Example 1 was obtained.

Example 4

In a nitrogen stream 10 m moles of p-xylylene-dichloiride were dissolved in 30 ml of xylene and 0.3 m moles of trioctylmethylammoniumchloride were added to this mixture.

11 m moles of bisphenol-S were dissolved in 30 ml of 1N aqueous solution caustic soda, and the resulting solution was added to the above mentioned mixture. The reaction was carried out for 6 hours at

80°C and polymer was deposited. The polymer was separated by filtering, washed with hydrochloric acid-methanol and then with water, and dried under reduced pressure. The values obtained from elementary analysis of the polymer were as follows:

Elementary analysis Calcd.: C, 68.17%; H, 4.58%

Found: C, 67.89%; H, 4.59%

The melting point of the polymer was 220°C and its intrinsic viscosity (η) determined in the dimethylacetamide was 0.34. Figure 2 shows the infrared absorption spectrum of the polymer.

Example 5

In a stream of nitrogen 10 m moles of p-xylylene-dichloride were dissolved in 30 m moles of xylene, and 0.3 m moles of trioctylmethylammoniumchloride were added to this mixture.

A mixture of 7 m moles of bisphenol-A and 3 m moles of of bisphenol-S was dissolved in 30 ml of 1N aqueous solution of caustic soda, and the resulting solution was added to the above-mentioned mixture. The resulting material was reacted, first for 3 hours at 80°C and thereafter for another 3 hours at 100°C, and cooled to room temperature. Then deposited polymer was separated by filtering. The polymer was washed and dried by a conventional method.

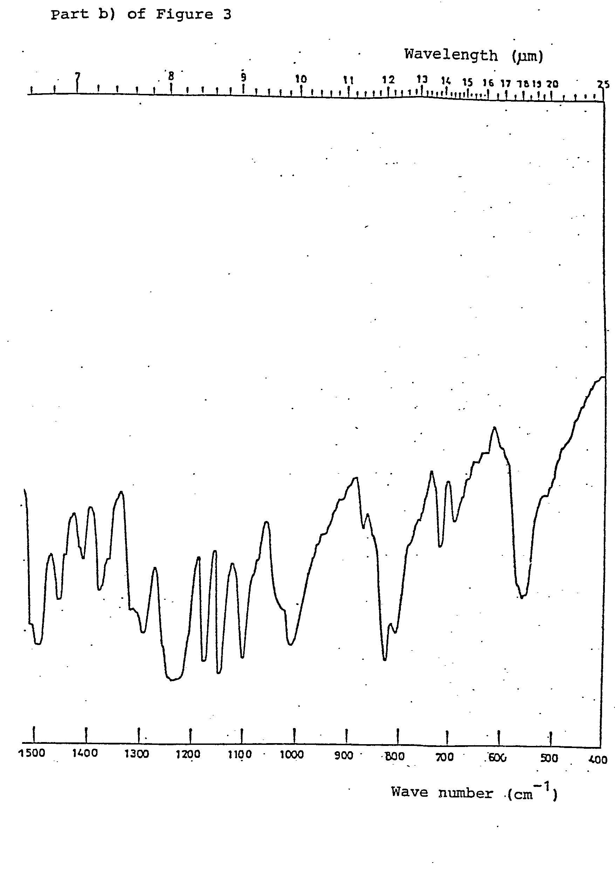

The melting point of the polymer was 165°C. Its infrared absorption spectrum is shown in Figure 3. It became clear from data of elementary analysis values that the polymer contains bisphenol-A and bisphenol-B units in amounts of 60.5 mole % and 39.5 mole %, respectively.

Elementary analysis Found: C, 77.33%; H, 5.79%

Figures 1, 2 and 3 show the infrared absorption spectra of polymers produced according to Examples 1, 4 and 5, respectively.

**Claim**

A method for the production of a polyether resin with an intrinsic viscosity of 0.3 dl/g or more having repeating units of the general formula I

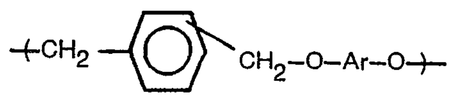

(I)

(wherein Ar is a divalent aromatic group), which comprises reacting an alkali metal salt of a bifunctional phenol of the general formula II

MO—Ar—OM′ (II)

(wherein M and M′ are alkali metals and Ar is as defined above) with a xylylene dichloride having the general formula III

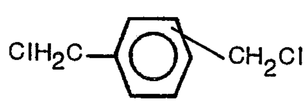

(III)

in the presence of a phase transfer catalyst, characterized in that said phase transfer catalyst is an oil-soluble quarternary ammonium salt, a quarternary phosphonium salt, a crown ether or a mixture thereof.

**Patentanspruch**

Verfahren zur Herstellung eines Polyätherharzes mit einer Eigenviskosität von mindestens 0,3 dl/g mit wiederkehrenden Einheiten der allgemeinen Formel I

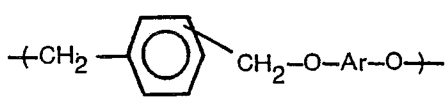

(I)

(in der Ar einen zweiwertigen aromatischen Rest bedeutet), umfassend die Umsetzung eines Alkalimetallsalzes eines zweiwertigen Phenols der allgemeinen Formel II

MO—Ar—OM′ (II)

(in der M und M' Alkalimetalle sind und Ar wie vorstehend definiert ist) mit einem Xylylendichlorid der allgemeinen Formel III

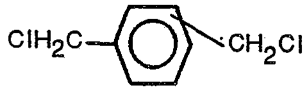

(III)

in Gegenwart eines Phasenübertragungskatalysators, dadurch gekennzeichnet, daß der Phasenübertragungskatalysator ein öllösliches quarternäres Ammoniumsalz, ein quarternäres Phosphonoiumsalz, ein Kronenäther oder ein Geisch davon ist.

**Revendication**

Procédé de production d'une résine de polyéther ayant une viscosité intrinsèque de 0,3 dl/g ou plus, comportant des unités de répétition de la formule générale I:

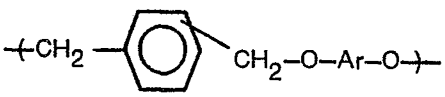

(I)

(dans laquelle Ar représente un groupe aromatique bivalent), qui comprend la réaction d'un sel de métal alcalin d'un phénol bifonctionnel de la formule générale II:

MO—Ar—OM' (II)

(dans laquelle M et M' sont des métaux alcalines et Ar est tel que défini précédemment) avec un dichlorure de xylylène répondant à la formule générale III:

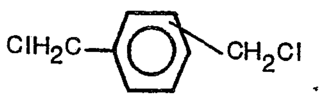

(III)

en présence d'un catalyseur de transfert de phase, caractérisé en ce que le catalyseur de transfert de phase est un sel d'ammonium quaternaire soluble dans l'huile, un sel de phosphonium quaternaire, un éther en couronne ou un mélange de ceux-ci.

Part a)

Fig. 1

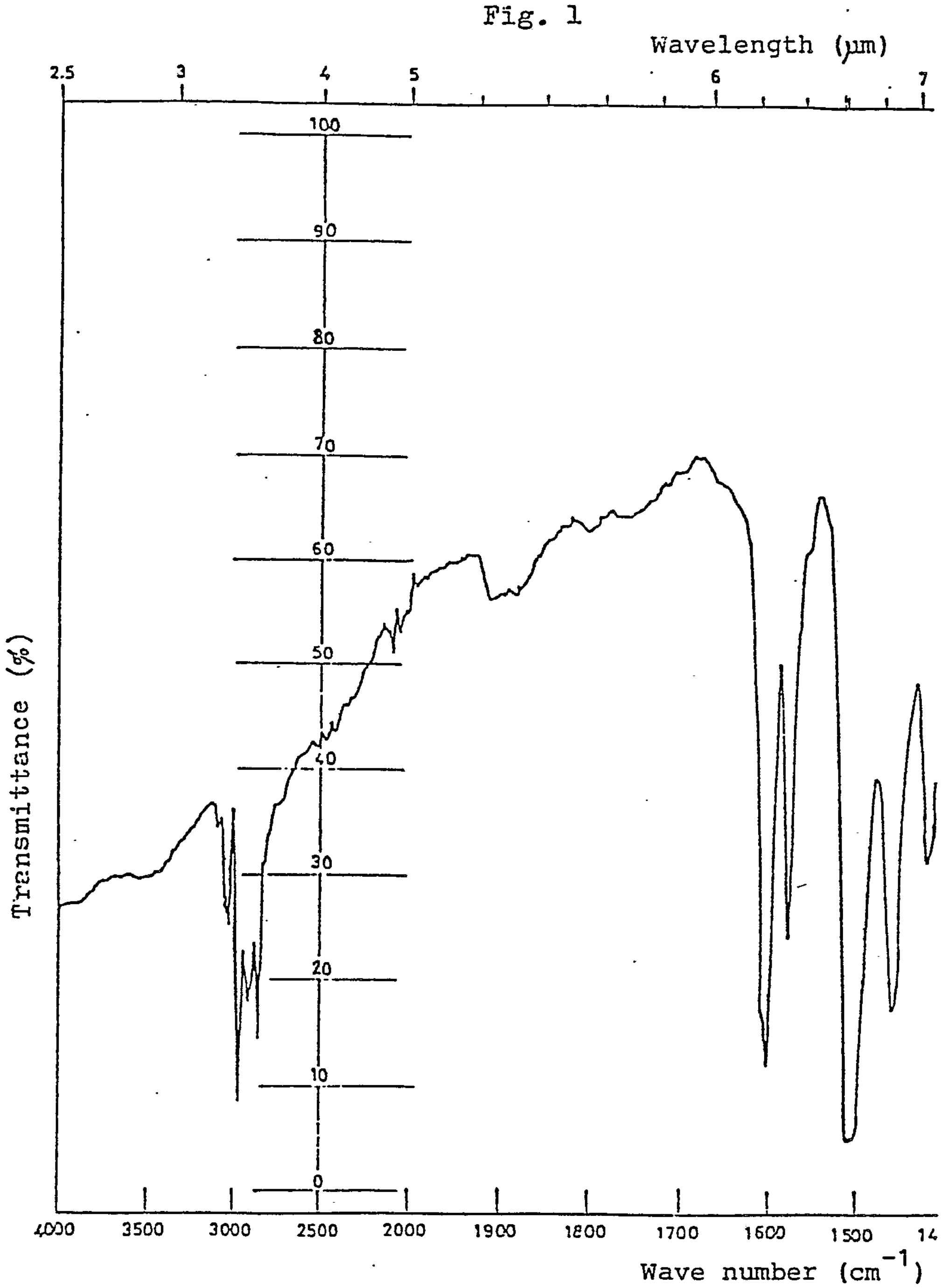
Wavelength (μm)
2.5
3
4
5
6
7
100
90
80
70
60
50
40
30
20
10
0
Transmittance (%)
4000
3500
3000
2500
2000
1900
1800
1700
1600
1500
14
Wave number (cm⁻¹)

Part b) of Figure 1

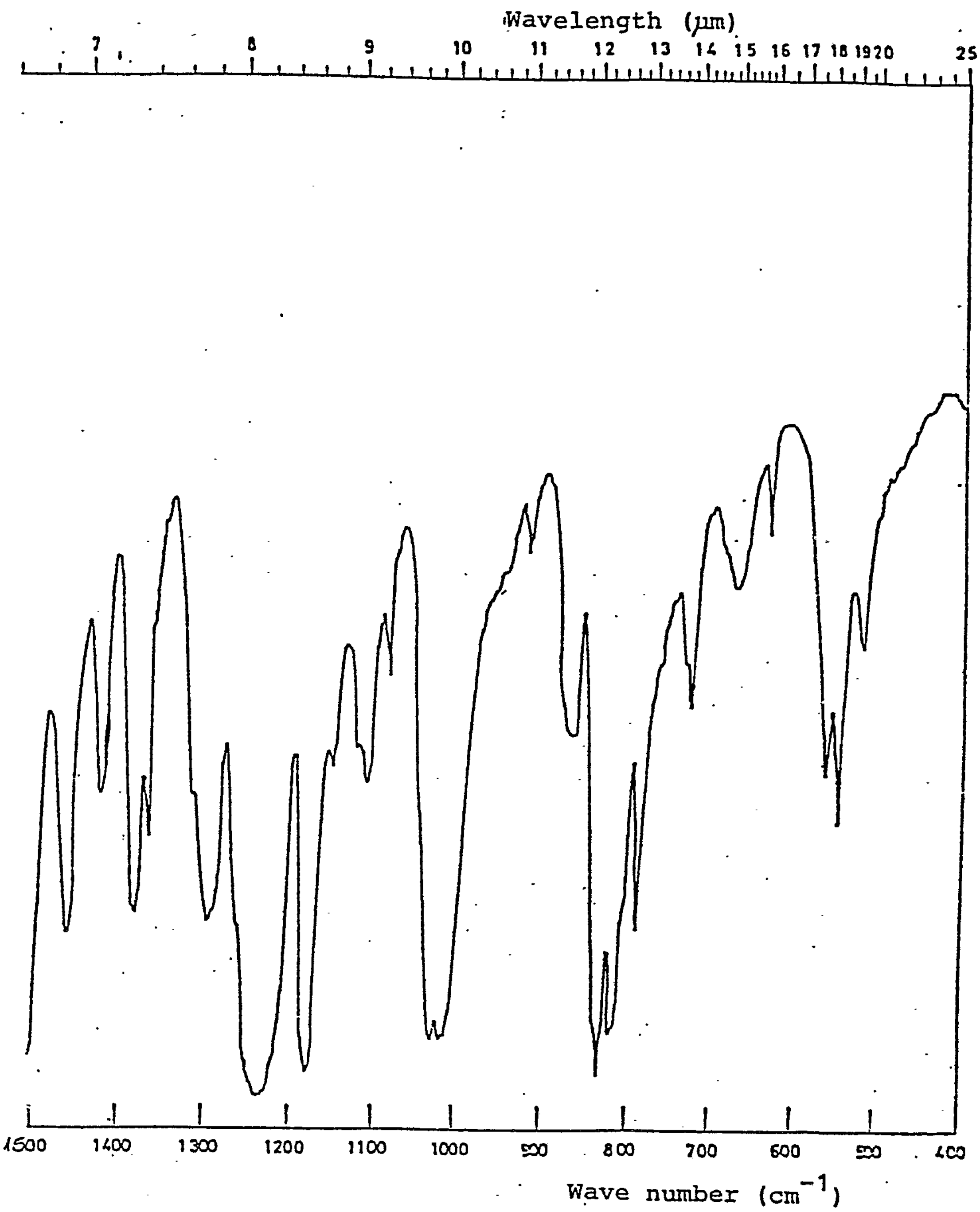

Part a)

Fig. 2

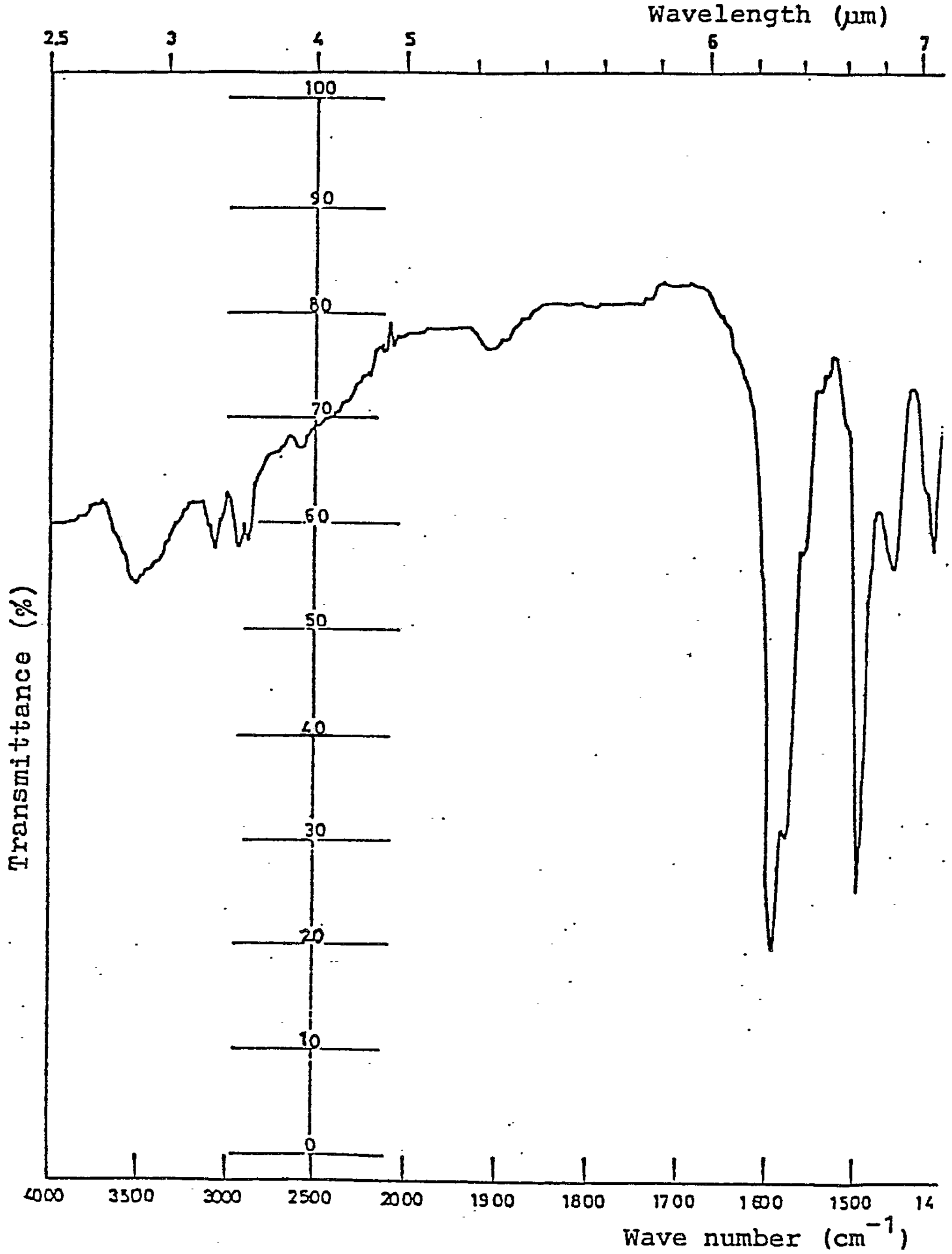
Wavelength (μm)
2.5
3
4
5
6
7
100
90
80
70
60
50
40
30
20
10
0
Transmittance (%)
4000
3500
3000
2500
2000
1900
1800
1700
1600
1500
14
Wave number (cm$^{-1}$)

Part b) of Figure 2

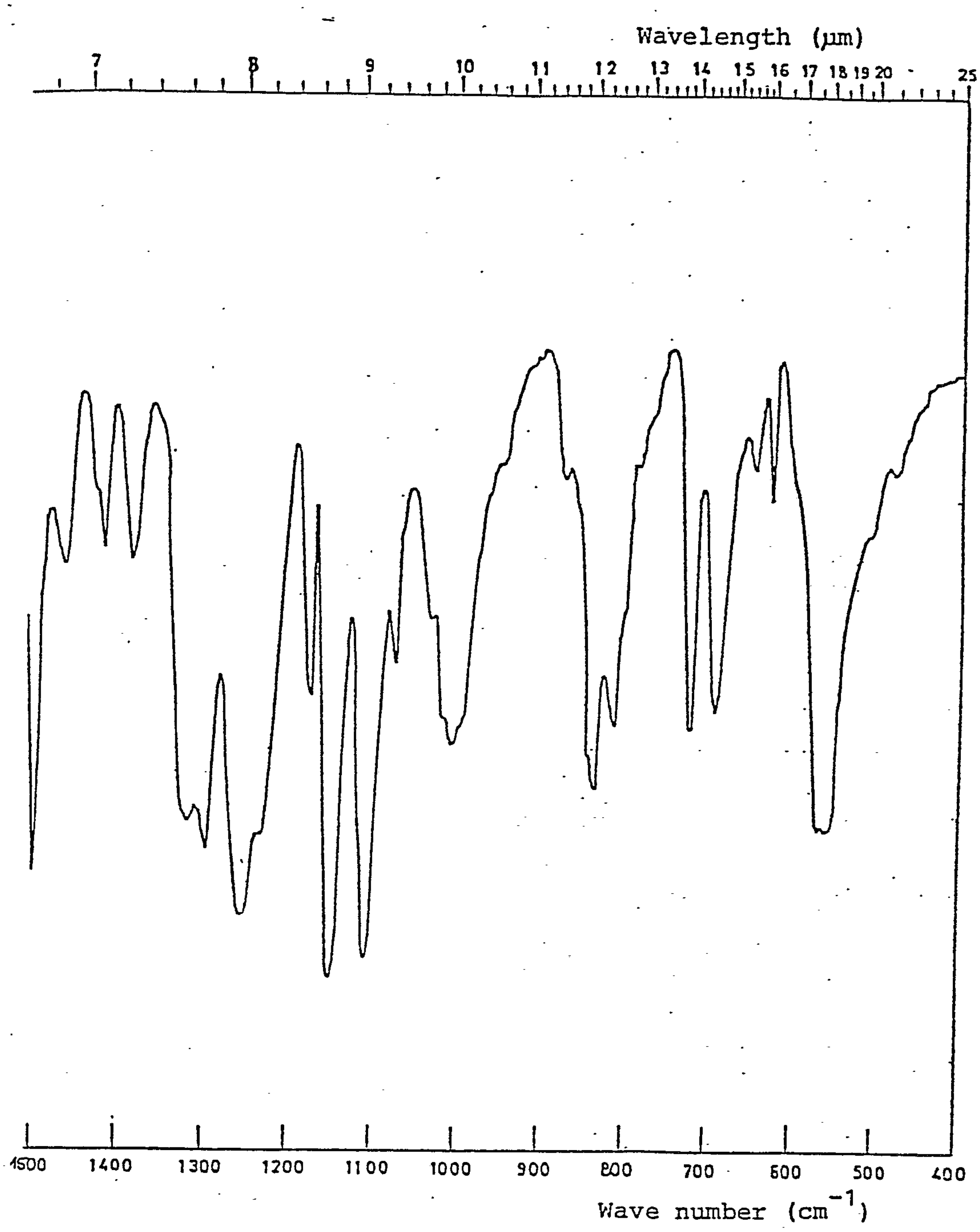

Part a) Fig. 3

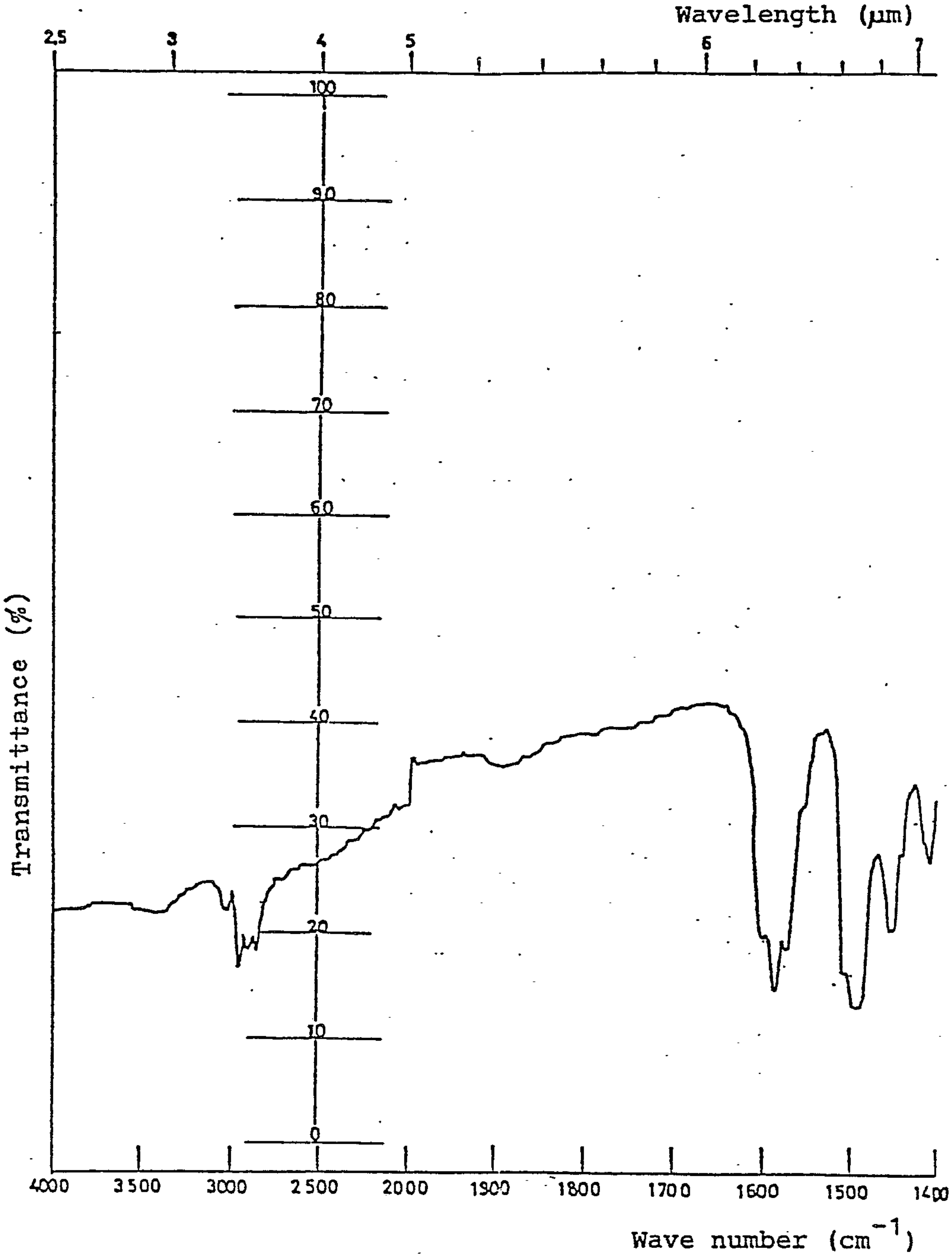

Wavelength (μm)
2,5
3
4
5
6
7
100
90
80
70
60
50
40
30
20
10
0
Transmittance (%)
4000
3500
3000
2500
2000
1900
1800
1700
1600
1500
1400
Wave number (cm$^{-1}$)

Part b) of Figure 3